# EUROPEAN PATENT APPLICATION

(11) **EP 3 540 411 A1**
(43) Date of publication of application: **18.09.2019**
(21) Application number: 17866132.8
(22) Date of filing: 27.10.2017
(51) Int. Cl.: G01N 21/84, F21S 2/00, F21Y 115/10

(54) **INSPECTION DEVICE**

(30) Priority: 31.10.2016 JP 2016212579
(71) Applicant: Imac Co., Ltd., Moriyama-shi, Shiga 524-0215 (JP)
(72) Inventor: HATABE Shinya, Moriyama-shi Shiga 524-0215 (JP)
(74) Representative: Zimmermann, Tankred Klaus
(86) International application number: PCT/JP2017/038989
(87) International publication number: WO 2018/079742

(57) **Abstract**

The present invention provides an inspection device, in which light is introduced from an end surface of a light guide plate, an article placed below the light guide plate is irradiated with the light, and an image of the article is photographed with a camera, wherein the inspection device can enhance the clearness of the image taken by the camera even if a reflection plate is not installed. This inspection device 1 includes: an illuminator 2 and a camera 3, the illuminator 2 including: a housing 4; light source 5 disposed in the housing 4; and a light guide plate 6 having an end surface 6a, an upper surface 6b provided with a large number of two-dimensionally arrayed transparent hemispherical bodies 6A formed thereon, and a lower surface 6c, the light guide plate 6 being disposed in the housing 4 in a state where the end surface 6a faces the light source 5 so as to introduce light from the light source 5, to reflect the light downward by the hemispherical bodies 6A, and to irradiate an article M placed below the lower surface 6c with the light; and the camera being disposed above the upper surface 6b of the light guide plate 6 to receive reflected light from the article M and to photograph the article M.

## Description

### [TECHNICAL FIELD]

The present invention relates to an inspection device that inspects an article by irradiating the article with light and photographing the article with a camera.

### [BACKGROUND ART]

Inspection devices performing inspection (visual inspection for detecting defects, scratches, stains, foreign matters, etc.) by irradiating an article (a product) that has been industrially manufactured with light and photographing the article with a camera have been conventionally used. Among such inspection devices, some inspection devices receive light introduced into a light guide plate from the end surface thereof and irradiate an article placed below the light guide plate with the light, and make a camera disposed above the light guide plate receive the light reflected on the article, so as to thereby photograph the article (e.g., Patent Document 1 and Patent Document 2). Such inspection devices including the light guide plate are advantageous in its compactness.

In the inspection device disclosed in Patent Document 1, for example, a large number of recesses are formed on an upper surface section of the light guide plate by laser machining or mechanical cutting. Each recess has a substantial V-shape cross section, and the recesses are arranged so as to form a straight line (a straight line in plan view) . The large number of recesses reflect the introduced light downward and irradiate the article placed below the light guide plate with the light. The camera is disposed above the light guide plate. The camera receives incident light reflected on the article and photographs the article.

In the inspection device described in Patent Document 2, the light guide plate, on which a large number of recesses (which are similar to the recesses in Patent Document 1) are formed, includes a no-recess region where recesses are not formed. On the upper side of the light guide plate, a reflection plate is disposed. The reflection plate has a transmission region disposed in a position overlapping the no-recess region and a reflection region disposed in the periphery of the transmission region. In the transmission region, light from the light guide plate passes through, whereas, in the reflection region, light from the light guide plate is reflected. The camera is disposed in a position in the no-recess region and the transmission region above the light guide plate and the reflection plate. The camera receives the incident light reflected on the article and photographs the article.

### [PRIOR ART DOCUMENTS]

### [PATENT DOCUMENTS]

[Patent Document 1] Japanese Patent Application Laid-open No. 2010-112735
[Patent Document 2] Japanese Patent Application Laid-open No. 2016-136124

### [SUMMARY OF THE INVENTION]

### [PROBLEM TO BE SOLVED BY THE INVENTION]

In the inspection device of Patent Document 2, light reflected on an article can be incident on the camera with little influence due to the recesses of the light guide plate. Therefore, when very precise inspection of an article is required, a clearer image taken by the camera can be obtained, compared with the case of the inspection device of Patent Document 1. However, the inspection device of Patent Document 2 requires the reflection plate in order to irradiate the article with a sufficient amount of light.

The present invention has been made in view of such circumstances, and an object of the present invention is to provide an inspection device that irradiates an article placed below a light guide plate with light introduced from an end surface of the light guide plate and photographs the article with a camera using light reflected on the article, the inspection device being capable of making an image photographed by the camera clearer even without a reflection plate.

### [MEANS FOR SOLVING THE PROBLEM]

In order to achieve the object, an inspection device according to an embodiment of the present invention includes: an illuminator; and a camera; the illuminator including: a housing; a light source disposed in the housing; and a light guide plate having an end surface, an upper surface provided with a large number of two-dimensionally arrayed transparent hemispherical bodies formed thereon, and a lower surface, the light guide plate being disposed in the housing in a state where the end surface faces the light source so as to introduce light from the light source, to reflect the light downward by the hemispherical bodies, and to irradiate an article placed below the lower surface with the light; and the camera being disposed above the upper surface of the light guide plate to receive reflected light from the article and to photograph the article.

Preferably, the illuminator further includes a light transmitting plate disposed apart from and above the large number of hemispherical bodies at an interval.

### [EFFECTS OF THE INVENTION]

According to the inspection device of the present invention, an image photographed by the camera can be made clearer even without a reflection plate.

### [BRIEF DESCRIPTION OF DRAWINGS]

Fig. 1 illustrates a sectional view of an inspection device according an embodiment of the present invention.
Fig. 2 illustrates a plan view of an illuminator of the inspection device according to the embodiment.
Fig. 3 illustrates an explanatory diagram for explaining, in a sectional view, a state of light in the inspection device according to the embodiment.
Fig. 4 illustrates an enlarged plan view of a part of a light guide plate of the inspection device according to the embodiment.
Fig. 5 illustrates an enlarged sectional view of an area in the vicinity of an upper surface of a part of the light guide plate of the inspection device according to the embodiment.
Fig. 6 illustrates an explanatory diagram for explaining, in an enlarged sectional view, a state of light in the inspection device according to the embodiment.

### [DESCRIPTION OF EMBODIMENTS]

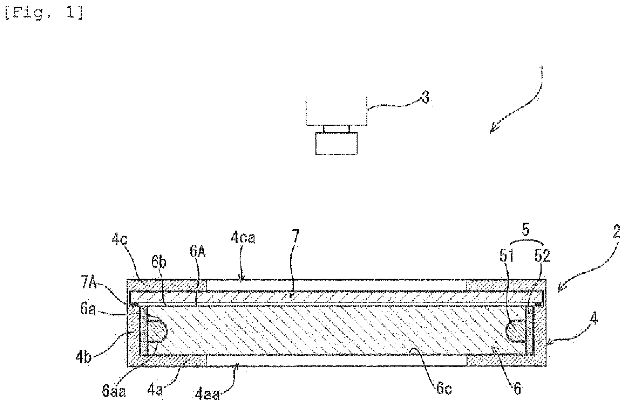

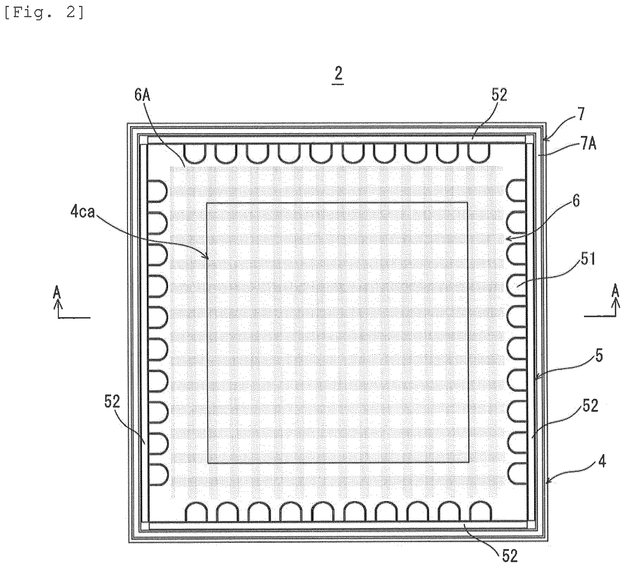

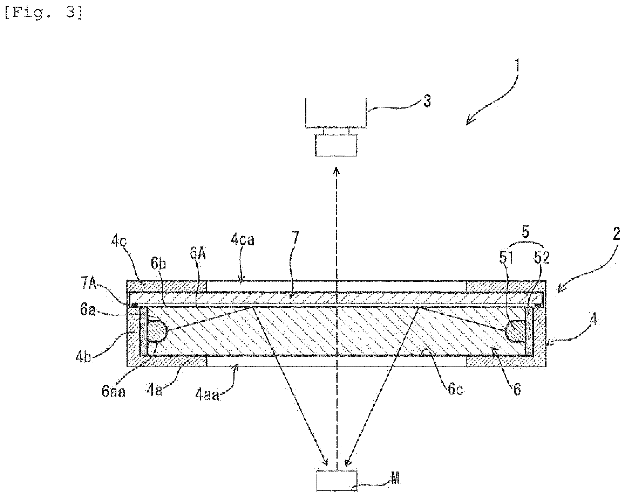

A embodiment for carrying out the present invention is explained hereinafter. An inspection device 1 according to an embodiment of the present invention includes, as shown in Fig. 1, an illuminator 2 and a camera 3. The illuminator 2 includes, as shown in Fig. 1 and Fig. 2, a housing 4, a light source 5, a light guide plate 6, and a light transmitting plate 7. As shown in Fig. 3, in the inspection device 1 the light guide plate 6 of the illuminator 2 introduces light (indicated by a solid line with an arrow) from an end surface 6a of the light guide plate 6 and irradiates an article M placed below the light guide plate 6 with the light, and the camera 3 disposed above the light guide plate 6 receives reflected light (indicated by a broken line with an arrow) from the article M to thereby photograph and inspect the article M. Fig. 1 (and Fig. 3) illustrates a sectional view taken along a position indicated by A-A in Fig. 2. For ease of understanding the illuminator 2, only a contour shape (a surface shape) of an upper wall 4c, which is explained below, of the housing 4 (and a light transmitting plate 7 and the light guide plate 6) is shown such that members and the like below the upper wall 4c become visible.

The housing 4 houses therein and supports the light source 5 and the light guide plate 6 (details of which will be explained below). In this embodiment, the housing 4 includes a bottom wall 4a, a peripheral wall 4b connected to the bottom wall 4a, and an upper wall 4c connected to the peripheral wall 4b. The bottom wall 4a and the upper wall 4c respectively have an opening 4aa and an opening 4ca for enabling light to pass through. The housing 4 is made of a metal material such as aluminum or copper, or a resin material, or the like.

The light source 5 is disposed in the housing 4. The light source 5 includes a plurality of light emitting elements 51 disposed to radiate lights on end surfaces 6a of sides (sides of a square in a plan view) of the light guide plate 6 (details of which will be explained below) and a plurality of elongated printed boards 52 which are provided so as to face the end surfaces 6a of the sides of the light guide plate 6 and on which the light emitting elements 51 are mounted (e.g., approximately ten light emitting elements 51 are mounted per one side). A light emitting diode or the like is used as the light emitting element 51. Besides a bullet type shown in Fig. 1, the light emitting element 51 can be formed in a shape suitable for surface mounting (a chip LED, etc.). The plurality of light emitting elements 51 (and the plurality of printed boards 52) can also be provided only on specific sides of the light guide plate 6.

The light guide plate 6 is disposed in the housing 4 such that the end surface 6a faces the light source 5. A member having a predetermined refractive index and having an excellent light-guiding property is used as the light guide plate 6. Usually, a resin material such as a transparent acrylic resin material is applied thereto. In an example shown in Fig. 2, the light guide plate 6 has a square shape. However, the shape of the light guide plate 6 is not limited thereto. The size and the thickness of the light guide plate 6 are not limited. For example, a light guide plate having a one-side length of approximately 10 to 20 cm and a thickness of approximately 5 mm can be used.

The light guide plate 6 introduces light from the light source 5 (the light emitting elements 51). In an example shown in Fig. 1, housing holes 6aa that house the light emitting elements 51 are provided at a fixed interval on the end surface 6a of the light guide plate 6. It is also possible to make the end surface 6a of the light guide plate 6 flat (without providing the housing holes 6aa) and dispose the light emitting elements 51 in a position close to or in close contact with the end surface 6a.

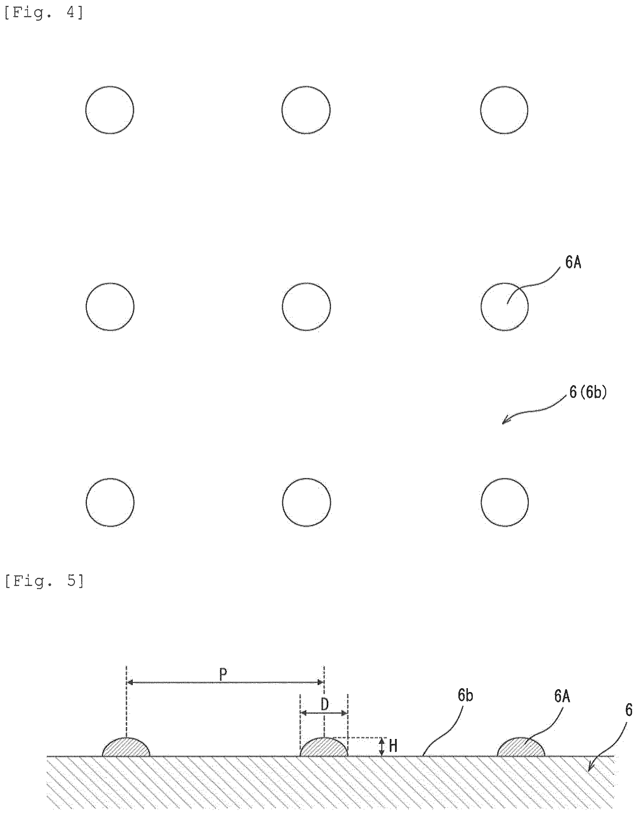

As shown in Fig. 4, a large number of hemispherical bodies 6A are formed on an upper surface 6b of the light guide plate 6 and are two-dimensionally arrayed. The large number of hemispherical bodies 6A are transparent. Herein, hemispherical refers to a shape, the surface of which smoothly descends in a direction away from the center (the plan view center) of the shape as shown in Fig. 5. A semielliptical shape and the like are also included in hemispherical. Transparent refers to a state with no coloring such as white coloring. The hemispherical body 6A can be formed by inkjet printing using ultraviolet curing ink. The ultraviolet curing ink may be, for example, an acrylic resin-based transparent ink.

The size of the hemispherical body 6A is not limited. For example, a diameter D can be set to approximately 20 µm to approximately 100 µm and height H can be set to approximately 10 µm to approximately 40 µm. An interval (a pitch) P between the hemispherical bodies 6A and 6A is determined depending on, for example, the size of the hemispherical body 6A. The interval P can be set to, for example, approximately 100 µm to approximately 300 µm. Note that it is also possible to change the interval P between the hemispherical bodies 6A and 6A according to a place (e.g., reduce the interval P from the periphery toward the center of the light guide plate 6) or change the diameter D and the height H of the hemispherical bodies 6A and 6A according to a place (e.g., increase the diameter D and the height H from the periphery toward the center of the light guide plate 6).

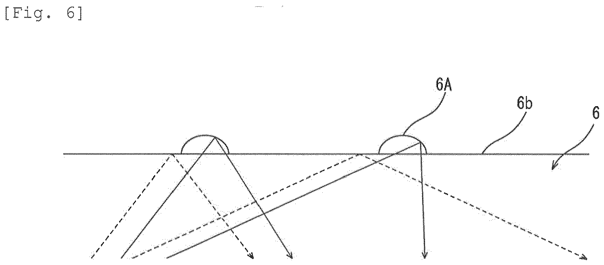

The light guide plate 6 can reflect, by the large number of hemispherical bodies 6A, light introduced from the light source 5 toward the article M in order to irradiate the article M placed below a lower surface 6c with the light. In detail, because of a difference in refractive indexes between the light guide plate 6 and the air, when the light introduced from the light source 5 is about to exit to the outside from the light source 5, a part of the light is transmitted and the remaining light is reflected if an incident angle on interfaces (the upper surface 6b and the lower surface 6c of the light guide plate 6) is smaller than a critical angle (e.g., 35° to 40°) and all the light is reflected if the incident angle is larger than the critical angle as indicated by a broken line with an arrow in Fig. 6. The light having the incident angle larger than the critical angle repeats the reflection and reaches a wide range including the center portion of the light guide plate 6. Because of a difference in refractive indexes between the hemispherical body 6A and the air, as indicated by a solid line with an arrow in Fig. 6, when the light entering the hemispherical body 6A is about to exit to the outside from the hemispherical body 6A, a part of the light is transmitted and the remaining light is reflected if an incident angle on an interface (the surface of the hemispherical body 6A) is smaller than the critical angle (e.g., 35° to 40°) and all the light is reflected if the incident angle is larger than the critical angle. Since the surface of the hemispherical body 6A is a curved surface, the light reflected by the hemispherical body 6A travels toward the article M from various directions.

The reflected light from the article M is made incident from the lower surface 6c of the light guide plate 6 and passes through the upper surface 6b of the light guide plate 6 or the hemispherical body 6A so that most of the reflected light from the article M exits upward.

In the light guide plate 6 on which such a large number of hemispherical bodies 6A are formed, compared with the light guide plate on which the large number of recesses are formed explained in the background art, the proportion of light passing through the lower surface 6c of the light guide plate 6 to irradiate the article M among light radiated from the light source 5 is large. For example, the proportion is approximately 90% in the light guide plate 6 on which the large number of hemispherical bodies 6A are formed. The proportion is approximately 70% in the light guide plate on which the large number of recesses are formed. In other words, in the light guide plate 6 on which the large number of hemispherical bodies 6A are formed, among the lights radiated from the light source 5, a ratio of lights exiting from the upper surface 6b of the light guide plate 6 without passing through the lower surface 6c of the light guide plate 6 is small. Further, the light reflected on the article M passes through not only a portion where the hemispherical body 6A is not formed on the upper surface 6b of the light guide plate 6 but also the hemispherical body 6A, and exits toward the camera 3. Therefore, an image photographed by the camera 3 becomes clearer. That is, an image photographed by the camera 3 becomes clear without, as in Patent Document 2 described above, disposing a reflection plate on the upper side of the light guide plate 6.

Since, among the light radiated from the light source 5, the proportion of light exiting from the upper surface 6b of the light guide plate 6, on which the large number of hemispherical bodies 6A are formed, without passing through the lower surface 6c of the light guide plate 6 is small, moires (interference fringes) due to the disposition of the plurality of light emitting elements 51 can be markedly reduced.

The light transmitting plate 7 is disposed at an interval above the large number of hemispherical bodies 6A. A member that satisfactorily transmits light is used as the light transmitting plate 7. Usually, a resin material such as a transparent acrylic resin material is applied. The light transmitting plate 7 is attached directly to the housing 4 or optionally attached to the light guide plate 6 or the light source 5, so as to thereby be positioned in and fixed to the housing 4. This attachment is performed by a member 7A (e.g., a double-sided tape) having a thickness which can make a gap. Such a light transmitting plate 7 is disposed at an interval from the large number of hemispherical bodies 6A. Therefore, air is present in the gap. The light transmitting plate 7 can protect an interface between the large number of hemispherical bodies 6A (and the light guide plate 6) and the air to secure a characteristic.

The inspection device according to the embodiment of the present invention is explained above. However, the present invention is not limited to the inspection device described in the embodiment. Various design changes are possible within the scope of the matters described in the claims. For example, the light transmitting plate 7 can be omitted or substituted by other means so long as the interface between the large number of hemispherical bodies 6A (and the light guide plate 6) and the air can be protected and the characteristic can be secured.

### [EXPLANATIONS OF REFERENCE NUMERALS]

- 1: Inspection device
- 2: Illuminator
- 3: Camera
- 4: Housing
- 5: Light source
- 51: Light emitting element
- 6: Light guide plate
- 6a: End surface of the light guide plate
- 6b: Upper surface of the light guide plate
- 6c: Lower surface of the light guide plate
- 6A: Hemispherical body
- 7: Light transmitting plate
- M: Article

## Claims

1. An inspection device, comprising:
an illuminator; and
a camera;
the illuminator including:
a housing;
a light source disposed in the housing; and
a light guide plate having an end surface, an upper surface provided with a large number of two-dimensionally arrayed transparent hemispherical bodies formed thereon, and a lower surface, the light guide plate being disposed in the housing in a state where the end surface faces the light source so as to introduce light from the light source, to reflect the light downward by the hemispherical bodies, and to irradiate an article placed below the lower surface with the light; and
the camera being disposed above the upper surface of the light guide plate to receive reflected light from the article and to photograph the article.

2. The inspection device according to claim 1, wherein
the illuminator further includes a light transmitting plate disposed apart from and above the large number of hemispherical bodies at an interval.
